## Europäisches Patentamt
## European Patent Office
## Office européen des brevets

(11) Numéro de publication: **0 184 953**
**B1**

# FASCICULE DE BREVET EUROPÉEN

(45) Date de publication du fascicule du brevet:
12.07.89

(51) Int. Cl.⁴: **H 04 L 27/10**

(21) Numéro de dépôt: **85402183.9**

(22) Date de dépôt: **12.11.85**

(54) **Procédé et dispositif de transmission d'information numérique par déplacement différentiel de fréquence.**

(30) Priorité: **16.11.84 FR 8417555**

(43) Date de publication de la demande:
**18.06.86 Bulletin 86/25**

(45) Mention de la délivrance du brevet:
**12.07.89 Bulletin 89/28**

(84) Etats contractants désignés:
**DE GB IT**

(56) Documents cité:
TELECOMMUNICATIONS AND RADIO
ENGINEERING, vol. 24, no. 8, août 1970, pages 37-40,
Washington, US; I.N. KYCHKIN: "Noise immunity
of data transmission systems using differential
frequency-phase shift keying (DFPSK)"
NACHRICHTENTECHNIK, vol. 21, no. 8, août 1971,
pages 278-281, Berlin, DD; N.T. PETROWITSCH et
al.: "Die Übertragung von Signalen mit relativen
Übertragungsverfahren (Differenzmodulation)"
IEEE TRANSACTIONS ON COMMUNICATION
TECHNOLOGY, vol. COM-16, no. 5, octobre 1968,
pages 657-668, New York, US; M.J. FERGUSON:
"Communication at low data rates - spectral
analysis receivers"
ICC'81, INTERNATIONAL CONFERENCE ON
COMMUNICATIONS, Denver, Colorado, 14-18 juin
1981, Conference Record, vol. 4 de 4, pages 76.1.1 -
76.1.5, IEEE, New York, US; M.K. SIMON et al.:

(73) Titulaire: **THOMSON- CSF, 51, Esplanade du
Général de Gaulle, F-92800 Puteaux (FR)**

(72) Inventeur: **Auger, Gérard, THOMSON- CSF SCPI
173, bld Haussmann, F-75379 Paris Cedex 08 (FR)**

(74) Mandataire: **Turlèque, Clotilde, THOMSON- CSF
SCPI, F-92045 PARIS LA DEFENSE CEDEX 67 (FR)**

(56) Documents cité: (suite)
"Time synchronization of a frequency-hopped
MFSK communication system"
IEEE TRANSACTIONS ON COMMUNICATION
TECHNOLOGY, vol. COM-14, no. 3, juin 1966, pages
259-265, New York, US; J. SALZ et al.: "An
experimental digital multilevel FM modem"

**EP 0 184 953 B1**

**Description**

L'invention se rapporte à un procédé et un dispositif de transmission d'information numérique dans un canal de transmission où les dérives de fréquence, lentement variables, sont grandes vis à vis du débit d'informations, et ou les instabilités de phase et de fréquence à court terme rendent difficile ou impossible la réalisation d'une boucle à verrouillage de phase.

La modulation par déplacement de fréquence n-aires connue fait appel à un ensemble de $n = 2^k$ fréquences (Telecommunications and Radio Engineering, vol. 24, no. 8, août 1970, pages 37 à 40). A chacune de ces fréquences correspond un bloc ou symbole de k bits à transmettre. Si les imperfections du canal de transmission induisent des erreurs de fréquence importantes, il est parfois possible de compenser ces erreurs globalement à la réception, mais les filtres permettant de discriminer la fréquence transmise parmi les n possibles doivent avoir une largeur de bande de fréquence suffisante pour admettre les erreurs résiduelles ou totales du canal de transmission. En conséquence l'espacement entre les fréquences successives choisies doit tenir compte de cette largeur de bande.

Un tel procédé de modulation présente des inconvénients compte-tenu de la large bande nécessaire pour tenir compte des dérives possibles, la sensibilité est dégradée soit par la bande de bruit trop grande des filtres, soit du fait des conditions d'accrochage d'une boucle de phase, lorsqu'il est possible de réaliser une telle boucle de phase.

- La bande occupée pour la transmission de l'information est grande: elle est au moins égale à n fois les erreurs de fréquence.

Le procédé et le dispositif de transmission d'information par déplacement différentiel de fréquence selon l'invention permettent de remédier à ces inconvénients.

Suivant l'invention, le procédé de transmission d'information numérique, est caractérisé en ce qu'il consiste:

- lors de l'émission, à effectuer un codage de modulation par déplacement différentiel de fréquence autour d'une fréquence centrale de modulation $F_0$, en associant à chaque symbole de k bits à transmettre un déplacement de fréquence, DF, choisi dans une table de $2^k$ déplacements de fréquence possibles respectivement associés aux $2^k$ symboles possibles de k bits, à ajouter, respectivement retrancher, ce déplacement à la fréquence associée au symbole précédent selon que la fréquence précédente est inférieure, respectivement supérieure, à la fréquence centrale de modulation, et à transmettre la fréquence correspondante pendant la durée du symbole, le signal de modulation résultant de ce codage étant transmis pour l'émission,
- lors de la réception, à effectuer après réception le décodage de modulation associé en estimant, pour des tranches de signal de la durée des symboles, définies au moyen d'un signal de synchronisation au rythme de modulation synchronisé sur le signal modulé reçu, une estimation des fréquences reçues successivement, et à en déduire les déplacements de fréquence correspondants et donc les symboles reçus.

L'invention a egalement pour objet le dispositif de transmission destiné à la mise en oeuvre de ce procédé.

Suivant l'invention, un dispositif de transmission d'information numérique par déplacement différentiel de fréquence, est caractérisé en ce qu'il associe:

- dans l'émetteur, un modulateur comportant un codeur de modulation destiné à recevoir une séquence de symboles de k bits à émettre, et à coder ces symboles en valeurs de déplacements de fréquence choisis dans un ensemble de $2^k$ déplacements de fréquence prédéterminés, et un synthétiseur de fréquence synthétisant à partir de ces valeurs de déplacements de fréquence la suite des fréquences constituant le signal de modulation, la fréquence synthétisée générée pendant la durée d'un symbole étant la fréquence associée au symbole précédent, augmentée ou diminuée du déplacement de fréquence, selon que la fréquence précédente est inférieure ou supérieure à une fréquence centrale de modulation,
- et dans le récepteur un démodulateur pour détecter les fréquences successivement reçues dans des tranches de signal définies par un signal de synchronisation au rythme de modulation symbole (SS1).

L'invention sera mieux comprise et d'autres caractéristiques apparaîtront à l'aide de la description qui suit en référence aux figures annexées:

- La figure 1 représente, pour un exemple particulier, la séquence de bits à transmettre et la suite des fréquences correspondantes issues du modulateur suivant le procédé de transmission selon l'invention;
- La figure 2 représente schématiquement le modulateur du dispositif de transmission selon l'invention;
- La figure 3 représente schématiquement le démodulateur du dispositif de transmission selon l'invention;
- La figure 4 représente un exemple de signaux dans le démodulateur.

Le procédé de transmission d'information suivant l'invention met en oeuvre un procédé de modulation particulier qui consiste à associer à un symbole de k bits un déplacement de fréquence par rapport à la fréquence précédemment émise, ce déplacement de fréquence étant choisi parmi $n = 2^k$ valeurs possibles.

Soit R le débit d'informations à transmettre, le rythme de modulation est alors $\frac{R}{k}$ symboles/seconde. Les déplacements de fréquence sont choisis de préférence égaux à des multiples de l'espacement entre les zéros

2

du spectre d'un signal de durée finie, égale à la durée $T_S$ d'un symbole associé à une fréquence pure, soit espacés de $\frac{1}{T_S} = \frac{R}{k}$.

Soit $F_o$ la fréquence centrale nominale de transmission, les fréquences des signaux effectivement émis sont par exemple $F_o \pm \frac{R}{2k}$;

$$F_o \pm \frac{3R}{2k}; F_o \pm \frac{5R}{2k}; F_o \pm (2^{k+1} - 3) \cdot \frac{R}{2k}. \tag{1}$$

Les déplacements de fréquence DF correspondant à la transmission des $2^k$ blocs différents, de k bits, sont les multiples de $\frac{R}{k}$:

$$0, \frac{R}{k}, \frac{2R}{k}, \frac{3R}{k}, \text{etc} \ldots (2^{k-1}) \cdot \frac{R}{k}.$$

Soit $F_i$ une fréquence choisie parmi les fréquences indiquées ci-dessus qui a été émise pour un bloc de rang donné. Lorsque le bloc suivant de k bits, de rang i+1, correspond au déplacement de fréquence $DF_{i+1}$, l'une des fréquences $F_i + DF_{i+1}$ ou $F_i - DF_{i+1}$ est émise. Le signe du déplacement est choisi de la manière suivante:

- si $F_i$ est inférieure à la fréquence centrale $F_o$, le déplacement de fréquence $DF_{i+1}$ est ajouté à la fréquence précédente:

$$F_{i+1} = F_i + DF_{i+1}$$

Si $F_i$ est supérieure à la fréquence centrale $F_o$, le déplacement de fréquence $DF_{i+1}$ est retranché à la fréquence précédente:

$$F_{i+1} = F_i - DF_{i+1}.$$

L'exemple numérique qui suit permettra de mieux comprendre le procédé de transmission d'information par déplacement différentiel de fréquence suivant l'invention. Si les bits d'informations sont groupés par deux, soit k = 2, n = $2^k$ = 4 déplacements de fréquence doivent être choisis, qui correspondent respectivement aux doublets de bits 00, 01, 10, et 11. Si la fréquence centrale du modulateur $F_o$ est égale à 1 KHz, et si le débit d'information R à transmettre est égal à 200 bits par seconde, les fréquences correspondantes issues du modulateur, données par les expressions (1) ci-dessus sont les suivantes:

1000 ± 50 Hz, 1000 ± 150 Hz, 1000 ± 250 Hz, soit un lot de fréquences qui est le suivant: 750, 850, 950, 1050, 1150, et 1250 Hz. Les déplacements correspondants aux doublets 00, 01, 10, et 11 peuvent être alors respectivement 0, 100, 200, et 300 Hz.

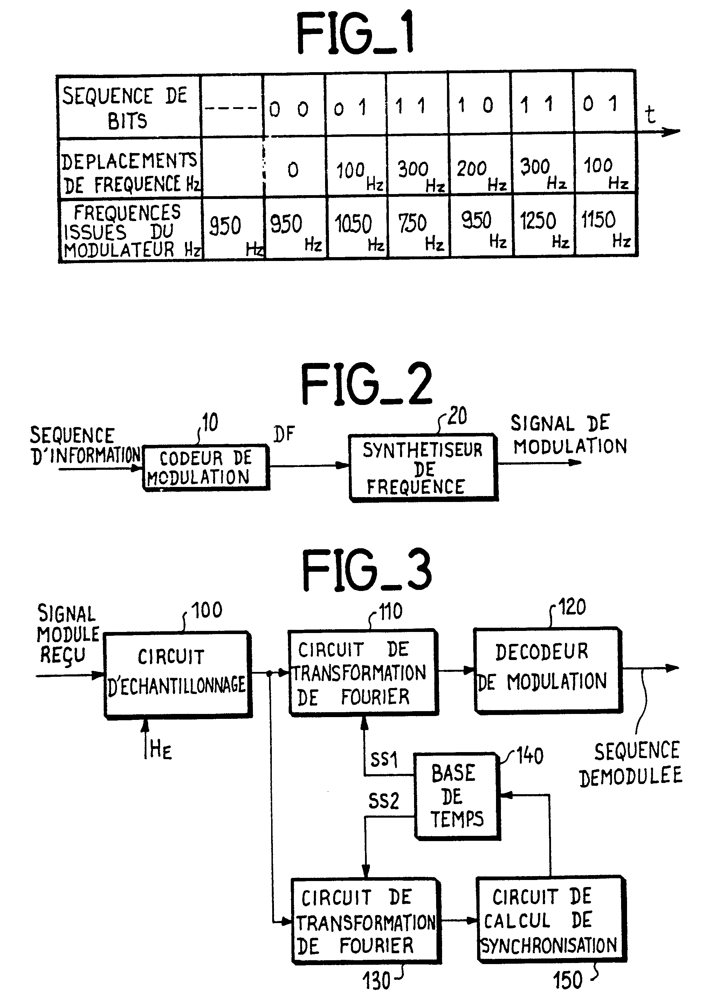

Ainsi, si à un instant donné la fréquence émise était $F_i$ = 950 Hz par exemple, et si la séquence d'information à transmettre est constituée de la suite des doublets suivants: 00, 01, 11, 10, 11, et 01, la suite des fréquences successivement issues du modulateur sera la suivante: 950 Hz, déplacement nul associé au doublet 00; 1050 Hz, déplacement de 100 Hz correspondant au doublet 01 ajouté à 950 Hz; 750 Hz, déplacement de 300 Hz correspondant au doublet 11 retranché à 1050 Hz; 950 Hz, correspondant au déplacement 200 Hz associé au doublet 10 ajouté à 750 Hz; 1250 Hz, correspondant à un déplacement de 300 Hz correspondant au doublet 11 ajouté à 950 Hz; et enfin 1150 Hz correspondant à un déplacement de 100 Hz associé au doublet 01 retranché à 1250 Hz. Le tableau de la figure 1 schématise la succession de doublets, la suite des déplacements de fréquence correspondants et la suite des fréquences émises associée à ces déplacements de fréquence, correspondant à cette séquence de bits.

La figure 2 représente un schéma synoptique simplifié d'un modulateur du dispositif de transmission d'information suivant l'invention. Ce modulateur comporte un codeur de modulation 10 qui groupe les bits à transmettre en symboles de k bits et associe à chaque symbole une valeur de déplacement de fréquence DF, de la manière indiquée ci-dessus. Pour cela, le codeur comporte une table en mémoire associant à chaque bloc ces valeurs prédéterminées de déplacement de fréquence. Ces valeurs sont appliquées à l'entrée de commande d'un synthétiseur de fréquence 20 qui, à partir de la fréquence $F_i$ générée pour le symbole précédent synthétise la fréquence $F_{i+1}$ de telle manière que, comme indiqué ci-dessus, si la fréquence $F_i$ était inférieure à la fréquence centrale $F_o$ le déplacement de fréquence $DF_{i+1}$ soit ajouté à la fréquence précédente, et si la fréquence précédente émise est supérieure à la fréquence centrale $F_o$, la fréquence émise $F_{i+1}$ soit la fréquence précédente $F_i$ diminuée du déplacement de fréquence $DF_{i+1}$. La séquence d'information numérique à transmettre appliquée à l'entrée du modulateur peut résulter d'un codage du type codage détecteur et/ou correcteur d'erreurs, habituellement mis en oeuvre dans les dispositifs de transmission d'information numérique.

La figure 3 représente le schéma synoptique du démodulateur du dispositif de transmission suivant l'invention. Le signal transmis après passage dans le canal de transmission, est appliqué à l'entrée d'un circuit d'échantillonnage 100, l'échantillonnage du signal reçu étant effectué à une cadence donnée par l'horloge d'échantillonnage $H_E$ telle que le calcul ultérieur de la transformée de Fourier rapide résultant de ces échantillons puisse s'effectuer sur une bande correspondant aux fréquences issues du modulateur augmentée des dérives de fréquence introduites par le canal de transmission. Par exemple, avec le rythme de modulation

indique ci-dessus $\frac{B}{k}$ = 100 symboles par seconde, la fréquence d'échantillonnage peut être 12,8 KHz, les dérives en fréquence dans le canal de transmission étant de l'ordre du kilohertz.

La suite des échantillons issus du circuit d'échantillonnage 100 est appliquée à un premier circuit de transformation de Fourier rapide, 110, suivi d'un circuit décodeur de modulation 120, et à un second circuit de transformation de Fourier rapide, 130. Le premier circuit de transformation de Fourier sert à la démodulation, l'autre à la synchronisation des symboles. Cette dernière fonction peut être évitée dans le cas où la synchronisation symbole peut être obtenue par ailleurs dans le récepteur. C'est en particulier le cas dans les liaisons à dispersion d'énergie où la synchronisation des symboles est dérivée d'une synchronisation code.

Dans le mode de réalisation représenté sur la figure 3, le dispositif de démodulation comporte une base de temps 140 fournissant un signal de synchronisation symbole dit SS1 appliqué au circuit de transformation de Fourier 110 destiné à la démodulation et synchronisé sur le signal reçu de telle manière que la transformée de Fourier, dans le domaine fréquentiel soit calculée sur des tranches de signal de durée égale à la durée d'un symbole correspondant sensiblement aux paliers de fréquence du signal reçu. Pour cela, un signal de synchronisation symbole SS2 décalé d'un demi symbole par rapport à SS1, est appliqué à l'entrée de commande du circuit de transformation de Fourier 130 destiné à la synchronisation. L'analyse des raies issues du circuit de transformation de Fourier 130 permet de déterminer le décalage à apporter au signal de synchronisation SS1 pour le synchroniser de manière convenable par rapport au signal reçu. En effet, lorsque le signal de synchronisation symbole local SS2, fourni par la base de temps 140, est déphasé exactement d'un demi symbole par rapport au signal reçu, la même fréquence apparaît deux fois successivement avec la même amplitude dans les transformées de Fourier de deux tranches de signal successives. Cette amplitude est réduite de 6 dB par rapport à celle qui serait obtenue avec un rythme symbole exactement synchronisé sur le signal reçu. Lorsque le signal de synchronisation symbole local SS2 n'est pas déphasé exactement d'un demi symbole, deux raies apparaissent successivement à la même fréquence, mais avec des amplitudes différentes. Si la première raie détectée est supérieure à la seconde, le signal de synchronisation symbole local doit être retardé, et inversement si la première raie est inférieure à la seconde.

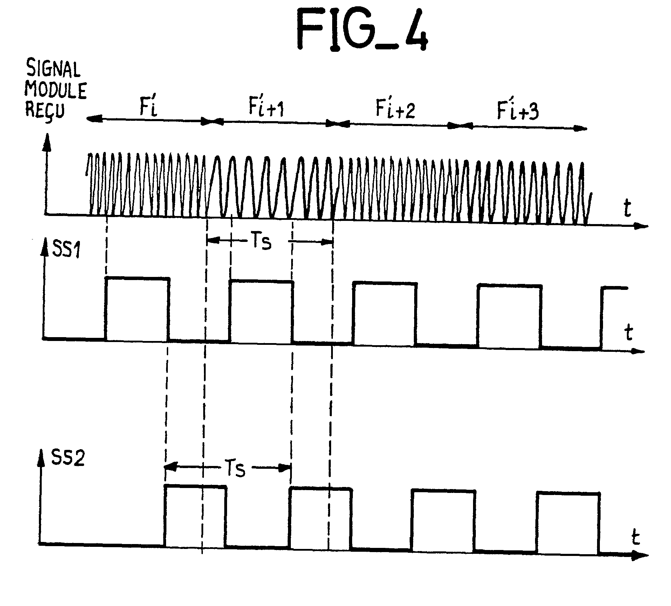

La figure 4 représente un exemple de signaux dans le démodulateur. Le premier diagramme représente le signal reçu, constitué d'une succession de paliers de fréquences, de durées égales à la durée d'un symbole $T_S$. En pratique, du fait du canal de transmission, les fréquences reçues $F'_i$, $F'_{i+1}$ ... ne sont pas égales aux fréquences émises $F_i$, $F_{i+1}$ ... On suppose qu'au moment de la réception le signal de synchronisation symbole SS1 est celui représenté sur la figure 4 et présente une avance par rapport au signal reçu. L'analyse de la transformée de Fourier du signal reçu, sur des tranches de signal égales à la durée d'un symbole, donne les résultats suivants chaque tranche de signal conduit à l'obtention d'une raie à la fréquence $F'_i$ correspondant à une grosse fraction de la puissance émise et une faible fraction de la puissance émise à la fréquence suivante $F'_{i+1}$.

Le procédé de démodulation mis en oeuvre est le suivant : Pour la démodulation, seules sont sélectionnées les raies dont la puissance dépasse un seuil prédéterminé. Si une seule réponse est supérieure à ce seuil prédéterminé, sa fréquence est considérée comme correspondant à la fréquence transmise.

Si plusieurs réponses sont détectées, les réponses dont les amplitudes ne se situent pas dans une fourchette convenable par rapport à la moyenne des précédents résultats sont éliminées ainsi les signaux brouilleurs à fréquence fixe peuvent être éliminés. Il en est de même des réponses incompatibles avec les déplacements de fréquence introduits lors de l'émission, et possibles compte tenu de la précédente fréquence sélectionnée. Dans ce cas la plus forte des réponses non éliminées est sélectionnée.

Enfin si aucune réponse n'est satisfaisante compte tenu des critères précédemment exposés, on considérera:

qu'il y a effacement, si un code correcteur d'erreur est utilisé;
- que la plus forte réponse compatible avec un saut de fréquence autorisé désigne la fréquence reçue, si aucun code correcteur ne peut traiter les effacements, après la démodulation.

Pour obtenir une synchronisation convenable, le circuit de transformation de Fourier 130 analyse le signal suivant des tranches égales à la durée d'un symbole mais décalées d'un demi symbole, comme indiqué ci-dessus, et comme représenté sur la figure 4. Ainsi, la désynchronisation peut être calculée par une méthode différentielle, en comparant les amplitudes des raies à la même fréquence dans deux tranches de signal SS2 successives. En effet, dans la première tranche de signal sont détectées une raie à la fréquence $F'_i$ et une raie à la fréquence $F'_{i+1}$; de même durant la période suivante du signal de synchronisation SS2 peuvent être détectées les raies à la fréquence $F'_{i+1}$ et $F'_{i+2}$. Si la synchronisation symbole SS2 était exactement décalée d'un demi symbole par rapport au signal reçu, les amplitudes des raies à la même fréquence détectées dans deux périodes successives de SS2 seraient égales. La différence entre les amplitudes de ces raies à la même fréquence est directement proportionnelle à l'écart de synchronisation si l'émission est faite à amplitude fixe. Si comme dans le cas représenté sur la figure 4 la fraction du palier à la fréquence $F'_{i+1}$ est plus grande dans la première période de SS2 que dans la seconde, le circuit de calcul de synchronisation 150 qui analyse les résultats du circuit de transformation de Fourier 130 commande un retard des signaux SS1 et SS2 issus de la base de temps, 140, retard proportionnel à la différence d'amplitude détectée; inversement dans le cas où la première raie a une amplitude inférieure à la seconde, le circuit de calcul de synchronisation 150 commande une avance de SS1 et SS2 proportionnelle à la différence d'amplitude. Le dispositif de calcul de synchronisation 150 effectue bien entendu un filtrage approprié.

Les points calculés de la transformée de Fourier rapide sont espacés d'une quantité égale au rythme symbole $\frac{1}{Ts}$. Si les erreurs de fréquence dues au canal de transmission décalent la fréquence $F_i$ pour l'amener à $F'_i$ entre deux points calculés, le résultat en est une réponse réduite pour les deux fréquences correspondant aux deux points calculés voisins par rapport à celle qui aurait pu être mesurée si la fréquence reçue correspondait à un point de calcul de la transformée. Ces amplitudes dépendent de la position exacte de la fréquence $F'_{i+1}$ par rapport aux deux points calculés de la FFT. Si à la réception, de manière connue en soi, les échantillons issus du circuit d'échantillonnage sont pondérés suivant une fenêtre prédéterminée permettant de modeler la réponse en fréquence souhaitée pour réaliser un filtrage, les amplitudes des points calculés de la transformée de Fourier dépendent également de la fenêtre de pondération. Un calcul d'interpolation tenant compte de tous ces éléments permet donc d'estimer la fréquence reçue avec une précision meilleure que le pas de calcul de la transformée, et de corriger l'amplitude mesurée.

L'invention n'est pas limitée au mode de réalisation précisément décrit ci-dessus du procédé de transmission suivant l'invention. En particulier, pour améliorer la sécurité et la rapidité de la synchronisation, il est possible d'introduire dans ce procédé de modulation une contrainte supplémentaire de façon qu'il existe un saut de fréquence à chaque nouveau symbole, quelque soit sa valeur. Pour cela deux fréquences supplémentaires doivent être définies, en plus de celles qui ont été définies précédemment de façon qu'aucun bloc de k bits ne soit affecté d'un déplacement de fréquence nul.

De plus, dans un second mode de réalisation l'acquisition des mesures de fréquence par la transformation de Fourier rapide sur une large bande, telle que décrite ci-dessus peut constituer une mesure approchée de ces fréquences et des décalages de fréquences apportés par le canal de transmission. Dans ce cas une mesure plus fine des fréquences émises, et des déplacements de fréquence correspondants est mise en oeuvre pour la démodulation et la synchronisation, grâce à une batterie de filtres numériques, plus sélectifs, positionnés en fréquence par la mesure grossière, mais ayant une bande réduite. L'observation de l'évolution des erreurs de fréquence, évolution lente par rapport au rythme symbole, permet de rectifier si nécessaire le centrage de la batterie de filtres. Les amplitudes des raies détectées par cette batterie de filtres sont traitées pour la démodulation et la synchronisation, comme celles issues des circuits de transformation de Fourier dans le premier mode de réalisation.

Ce type de modulation peut s'appliquer chaque fois que les erreurs de fréquence du canal de transmission sont beaucoup plus grandes que la fréquence de modulation elle-même, surtout lorsque les instabilités de phase et de fréquence interdisent l'accrochage d'une boucle de phase. Un exemple typique d'application est la transmission d'informations numériques à faible débit par satellite, sur des fréquences porteuses élevées.

## Revendications

1. Procédé de transmission d'information numérique caractérisé en ce qu'il consiste:
   - lors de l'émission, à effectuer un codage de modulation par déplacement différentiel de fréquence autour d'une fréquence centrale de modulation $F_0$, en associant à chaque symbole de k bits à transmettre un déplacement de fréquence, DF, choisi dans une table de $2^k$ déplacements de fréquence possibles respectivement associés aux $2^k$ symboles possibles de k bits, à ajouter, respectivement retrancher, ce déplacement à la fréquence associée au symbole précédent selon que la fréquence précédente est inférieure, respectivement supérieure à la fréquence centrale de modulation, et à transmettre la fréquence correspondante pendant la durée du symbole, le signal de modulation résultant de ce codage étant transmis pour l'émission,
   - lors de la réception, à effectuer, après réception le décodage de modulation associé en estimant pour des tranches de signal de la durée des symboles, définies au moyen d'un signal de synchronisation au rythme de modulation synchronisé sur le signal modulé reçu, une estimation des fréquences reçues successivement, et à en déduire les déplacements de fréquence correspondants et donc les symboles reçus.

2. Procédé selon la revendication 1, caractérisé en ce que les $2^k$ déplacements de fréquence possibles sont des multiples régulièrement espacés du rythme des symboles.

3. Procédé selon l'une des revendications 1 et 2, caractérisé en ce que l'estimation de la fréquence reçue dans une tranche de signal est faite à partir d'une transformation de Fourier de cette tranche de signal par détection, dans la transformée de Fourier, de la fréquence la plus probablement reçue en fonction de la fréquence retenue pour la tranche de signal précédente et des déplacements de fréquence possibles.

4. Procédé selon l'une des revendications 1 à 3, caractérisé en ce qu'une estimation de la synchronisation d'un signal au rythme de modulation généré à la réception est faite à partir des transformées de Fourier de deux tranches successives de signal reçu, décalées de la durée d'un demi symbole par rapport au signal de synchronisation, par comparaison des amplitudes de raies à la même fréquence, correspondant à la fréquence émise, détectées dans ces deux tranches de signal successives, le signal de synchronisation étant correctement synchronisé lorsque ces deux raies ont la même amplitude, en avance, respectivement en retard, par rapport au signal reçu si la raie détectée dans la première tranche est supérieure, respectivement inférieure à celle détectée dans la seconde, la différence d'amplitude permettant de commander la resynchronisation.

5. Procédé selon l'une des revendications 3 et 4, caractérisé en ce que l'estimation de la fréquence reçue par la méthode de transformation de Fourier, conduit à une mesure grossière de la fréquence reçue, un filtrage, tenant compte de cette mesure grossière pour fixer la bande de filtrage, étant mis en oeuvre pour réaliser une mesure précise de la fréquence reçue.

6. Dispositif de transmission d'information numérique par déplacement différentiel de fréquence, caractérisé en ce qu'il associe:
- dans l'émetteur, un modulateur comportant un codeur de modulation (10), destiné à recevoir une séquence de symboles de k bits à émettre, et à coder ces symboles en valeurs de déplacements de fréquence choisis dans un ensemble de $2^k$ déplacements de fréquence prédéterminés, et un synthétiseur de fréquence (20) synthétisant à partir de ces valeurs de déplacements de fréquence, la suite des fréquences constituant le signal de modulation, la fréquence synthétisée générée pendant la durée d'un symbole étant la fréquence associée au symbole précédent, augmentée ou diminuée du déplacement de fréquence, selon que la fréquence précédente est inférieure ou supérieure à une fréquence centrale de modulation,
- et dans le récepteur un démodulateur pour détecter les fréquences successivement reçues dans les tranches de signal définies par un signal de synchronisation au rythme de modulation symbole (SS1).

7. Dispositif de transmission selon la revendication 6, caractérisé en ce que le démodulateur est numérique et comporte un circuit d'échantillonnage (100), un circuit de transformation de Fourier (110) relié à la sortie du circuit d'échantillonnage, ayant une entrée de commande recevant un signal de synchronisation symbole (SS1) synchronisé sur le signal reçu, et un circuit décodeur (120), qui, à partir du spectre de chaque tranche de signal reçu de la durée d'un symbole, estime la fréquence reçue dans cette tranche, et le déplacement de fréquence correspondant compte tenu de la fréquence estimée de la tranche précédente.

8. Dispositif de transmission selon l'une des revendications 6 et 7, caractérisé en ce que le démodulateur comporte des moyens pour générer localement par une base de temps (140) un signal (SS1) au rythme symbole synchronisé sur le signal reçu, qui comportent un circuit d'échantillonnage du signal reçu (100), un circuit de transformation de Fourier (130) ayant une entrée de signal reliée à la sortie du circuit d'échantillonnage (100) et une entrée de commande recevant un signal au rythme symbole (SS2) décalé d'une durée égale à celle d'un demi symbole par rapport au signal de synchronisation (SS1), et un circuit de calcul de synchronisation (150) qui compare les amplitudes des raies à la même fréquence dans les spectres de deux tranches successives de signal décalées d'un demi symbole, le circuit de calcul de synchronisation ayant une sortie reliée à une entrée de commande de décalage de la base de temps (140) activée lorsque les amplitudes des raies à la même fréquence ne sont pas égales.

9. Dispositif de transmission selon l'une des revendications 7 et 8, caractérisé en ce que le démodulateur comporte une batterie de filtres numériques sélectifs à bande réduite centrés sur les fréquences estimées par le circuit décodeur (120) pour préciser les valeurs de fréquence estimées et en déduire les déplacements de fréquence et les symboles transmis.

**Patentansprüche**

1. Verfahren zur Übertragung digitaler Daten, dadurch gekennzeichnet, daß es darin besteht:
- daß auf der Sendeseite eine Modulationsverschlüsselung durch Differenzfrequenzumsetzung um eine Modulationsmittelfrequenz $F_0$ durchgeführt wird, wobei jedem zu übertragenden Symbol aus k Bits eine Frequenzversetzung DF zugeordnet wird, die aus einer Tabelle von $2^k$ möglichen Frequenzversetzungen, welche den $2^k$ möglichen Symbolen aus k Bits zugeordnet sind, ausgewählt wird, daß diese Versetzung der dem vorhergehenden Symbol zugeordneten Frequenz hinzugefügt bzw. von ihr abgezogen wird, je nachdem, ob die vorhergehende Frequenz kleiner oder größer als die Modulationsmittelfrequenz ist, und daß die entsprechende Frequenz während der Dauer des Symbols übertragen wird, wobei das aus dieser Verschlüsselung hervorgehende Modulationssignal zur Aussendung übertragen wird,
- daß auf der Empfangsseite nach dem Empfangen die Entschlüsselung der zugeordneten Modulation erfolgt, indem für Signalabschnitte mit der Dauer der Symbole, welche mit Hilfe eines Synchronisationssignals im Takt der Modulation, der auf das empfangene modulierte Signal synchronisiert ist, definiert werden, eine Abschätzung der nacheinander empfangenen Frequenzen erfolgt, und daß daraus auf die entsprechende Frequenzversetzung und somit auf die empfangenen Symbole geschlossen wird.

2. Verfahren nach Anspruch 1, dadurch gekennzeichnet, daß die $2^k$ möglichen Frequenzversetzungen gleichmäßig verteilte Vielfache des Symboltakts sind.

3. Verfahren nach einem der Ansprüche 1 und 2, dadurch gekennzeichnet, daß die Abschätzung der in einem Signalabschnitt empfangenen Frequenz ausgehend von einer Fourier-Transformation dieses Signalabschnitts durch Erfassung der in der Fourier-Transformierten mit der höchsten Wahrscheinlichkeit empfangenen Frequenz in Abhängigkeit von der für den vorhergehenden Signalabschnitt festgehaltenen Frequenz sowie der möglichen Frequenzversetzungen durchgeführt wird.

4. Verfahren nach einem der Ansprüche 1 bis 3, dadurch gekennzeichnet, daß eine Abschätzung der Synchronisation eines Signals im beim Empfang erzeugten Takt der Modulation ausgehend von den Fourier-Transformierten von zwei aufeinanderfolgenden Abschnitten des empfangenen Signals, die um die Dauer eines halben Symbols in Bezug auf das Synchronisationssignal gegen einander verschoben sind, durch Vergleich der Amplituden der Spektrallinien gleicher Frequenz erfolgt, die der ausgesandten Frequenz entspricht und in diesen beiden aufeinanderfolgenden Signalabschnitten erfaßt wurden, wobei das Synchronisationssignal korrekt synchronisiert ist, wenn die beiden Spektrallinien die gleiche Amplitude haben, und voreilt oder nacheilt bezüglich des empfangenen Signals, sofern die im ersten Abschnitt erfaßte Spektrallinie größer bzw. kleiner als die im zweiten Abschnitt erfaßte ist, wobei die Amplitudendifferenz erlaubt, die Resynchronisierung zu steuern.

5. Verfahren nach einem der Ansprüche 3 und 4, dadurch gekennzeichnet, daß die Abschätzung der empfangenen Frequenz durch die Methode der Fourier-Transformation zu einer groben Messung der empfangenen Frequenz führt, wobei eine Filterung, die dieser groben Messung zur Bestimmung der Filterbandbreite Rechnung trägt, durchgeführt wird, um eine genaue Messung der empfangenen Frequenz durchzuführen.

6. Vorrichtung zur Übertragung digitaler Daten durch Differenzfrequenzumsetzung dadurch gekennzeichnet, daß sie

- im Sender eine Modulator aufweist mit einem Modulationskodierer (10) zum Empfang einer Folge von auszusendenden Symbolen aus k Bits und zum Verschlüsseln dieser Symbole in Frequenzversetzungen, die aus einer Gesamtheit von 2 vorbestimmten Frequenzversetzungen gewählt werden, und mit einem Frequenzsynthesizer (20) der die Frequenzsynthese aus diesen Frequenzversetzungswerten durchführt, wobei die Folge von Frequenzen das Modulationssignal bildet und die während der Dauer eines Symbols erzeugte synthetisierte Frequenz die dem vorhergehenden Symbol zugeordnete Frequenz ist, vergrößert oder verkleinert um die Frequenzversetzung, je nachdem, ob die vorhergehende Frequenz kleiner oder größer als eine Modulationsmittelfrequenz ist,

- im Empfänger einen Demodulator zur Erfassung der nacheinander empfangenen Frequenzen in den Signalabschnitten aufweist, die durch ein Synchronisationssignal im Takt der Symbolmodulation (SS1) definiert sind.

7. Übertragungsvorrichtung nach Anspruch 6, dadurch gekennzeichnet, daß der Demodulator ein Digitaldemodulator ist und einen Tastkreis (100), einen Fourier-Transformationskreis (110), welcher mit dem Ausgang des Tastkreises verbunden ist und einen Steuereingang besitzt, der ein auf das empfangene Signal synchronisiertes Symbolsynchronisationssignal empfängt, und einen Dekodierkreis (120) aufweist, der aus dem Spektrum jedes empfangenen Signalabschnitts von der Dauer eines Symbols die in diesem Abschnitt empfangene Frequenz sowie die entsprechende Frequenzversetzung, unter Berücksichtigung der geschätzten Frequenz des vorhergehenden Abschnitts abschätzt.

8. Übertragungsvorrichtung nach einem der Ansprüche 6 und 7, dadurch gekennzeichnet, daß der Demodulator Mittel zur örtlichen Erzeugung eines auf das empfangene Signal synchronisierten Signals (SS1) mit Symboltakt durch eine Zeitbasis (140) aufweist, wobei die Mittel einen Tastkreis (100) für das empfangene Signal, einen Fourier-Transformationskreis (130) mit einem an den Ausgang des Tastkreises (100) angeschlossenen Signaleingang und einen Steuereingang, welcher ein Signal im Symboltakt (SS2) empfängt, das gegen das Synchronisationssignal (SS1) um eine der Dauer eines halben Symbols entsprechende Dauer verschoben ist, und einen Synchronisationsberechnungskreis (150) besitzen, der die Amplituden der Spektrallinien gleicher Frequenz in den Spektren der beiden aufeinanderfolgenden Abschnitte des um ein halbes Symbol verschobenen Signals vergleicht, wobei der Synchronisationsberechnungskreis einen Ausgang aufweist, der an einen Verschiebungssteuereingang der Zeitbasis (140) angeschlossen ist, der aktiviert wird, wenn die Amplituden der Spektrallinien gleicher Frequenz nicht gleich sind.

9. Übertragungsvorrichtung nach einem der Ansprüche 7 und 8, dadurch gekennzeichnet, daß der Demodulator einen Satz digitaler selektiver Filter reduzierter Bandbreite aufweist, die auf die vom Dekodierkreis (120) geschätzten Frequenzen eingestellt sind, um die geschätzten Frequenzwerte zu präzisieren und daraus die Frequenzversetzungen und die übertragenen Symbole abzuleiten.

## Claims

1. A method for the transmission of digital data, characterized in that it consists:
- when transmitting, in an encoding by differential frequency shift keying about a center modulation frequency $F_o$, while associating with each symbol consisting of k bits to be transmitted a frequency shift DF, selected from a table containing $2^k$ possible frequency shifts respectively associated with $2^k$ possible symbols of k bits, in adding respectively subtracting this shift to respectively from the frequency associated with the preceding symbol according to whether the preceding frequency is lower or higher than the modulation center frequency, and in transmitting the corresponding frequency during the period of the symbol, the modulation signal resulting from the encoding being passed on for the purpose of transmission,
- when receiving, in the decoding of the associated modulation by way of estimating for the interval of the symbols contained in a signal segment, the latter being defined by means of a synchronization signal having the modulation frequency and synchronized with the received modulated signal, an assessment of the frequencies successively received, and in deriving therefrom the corresponding frequency shifts and thus the received symbols.

2. A method according to claim 1, characterized in that the $2^k$ possible frequency shifts are regularly spaced multiple of the clock rate of the symbols.

3. A method according to one of claims 1 and 2, characterized in that the assessment of the received frequency in a signal segment is performed on the basis of a Fourier transformation of this signal segment, by detecting in the Fourier-transform the most probable received frequency as a function of the frequency retained for the preceding signal segment and the possible frequency shifts.

4. A method according to one of claims 1 to 3, characterized in that an assessment of the synchronization of a signal having the modulation frequency generated on the receive side is performed in using the Fourier transforms derived from two received successive signal segments, spaced by the duration of one half-symbol in relation to the synchronization signal, by comparing the amplitudes of the spectral lines having the same frequency which corresponds to the transmitted frequency as detected in the two successive signal segments, the synchronization signal being correctly synchronized, when the two lines have the same amplitude, while it precedes or is delayed respectively with respect to the received signal when the spectral line detected in the first segment is greater respectively smaller than the one detected in the second segment, the difference in amplitude allowing to control the resynchronization.

5. A method according to one of claims 3 and 4, characterized in that the assessment of the received frequency by means of the Fourier-transform method leads to a rough measurement of the received frequency, a filtering which takes into account this rough measurement for determining the filter bandwidth, being performed in order to realize a precise measurement of the received frequency.

6. A digital data transmission device using differential frequency shift keying, characterized in that it associates:

- in the transmitter, a modulator comprising a modulation encoder (10), intended to receive a sequence of symbols of k bits to be transmitted, and to encode these symbols in terms of frequency shift values selected from a totality of $2^k$ predetermined frequency shifts, and a frequency synthesizer (20) adapted to synthesize, in using these frequency shift values, a train of frequencies which constitutes the modulation signal, the frequency synthesized during the interval of a symbol being the frequency associated to the preceding symbol, increased or decreased by the frequency shift depending upon whether the preceding frequency is smaller or greater than a center modulation frequency,

- and, in the receiver, a demodulator for detecting the frequencies successively received in the signal segments defined by a synchronization signal at the frequency of the symbol synchronization (SS1).

7. A transmission device according to claim 6, characterized in that the demodulator is a digital one and comprises a sampling circuit (100), a Fourier-transform circuit (110), connected to the output of the sampling circuit, having a control input, which receives a symbol synchronization signal (SS1) synchronized with the received signal, and a decoder circuit (120) which in using the spectrum of each segment signal received during the interval of a symbol assesses the received frequency contained in this segment as well as the corresponding frequency shift, taking into account the assessed frequency of the preceding segment.

8. A transmission device according to one of claims 6 and 7, characterized in that the demodulator comprises means for locally generating by means of a time base (140) a signal (SS1) having the symbol frequency and being synchronized with the received signal, which means comprise a circuit (100) for sampling the received signal, a Fourier transform circuit (130) having a signal input connected to the output of the sampling circuit (100) and a control input, which receives a signal having the symbol frequency (SS2) and being shifted by an interval equal to that of a half-symbol in relation to the synchronization signal, and a synchronization computing circuit (150), which compares the amplitudes of the spectral lines having the same frequency in the spectra of two successive signal segments shifted one to another by a half-symbol, the synchronization computing circuit having an output connected to the shift control input of the time base (140), which is activated when the amplitudes of the spectral lines having the same frequency are not equal.

9. A transmission device according to one of claims 7 and 8, characterized in that the demodulator comprises a battery of selective digital filters having a reduced bandwidth and being centered on the assessed frequencies by a decoder circuit (120), in order to sharpen the assessed frequency values and to derive therefrom the frequency shifts and the transmitted symbols.

# FIG_1

| SEQUENCE DE BITS | ---- | 0  0 | 0  1 | 1  1 | 1  0 | 1  1 | 0  1 | t |
|---|---|---|---|---|---|---|---|---|
| DEPLACEMENTS DE FREQUENCE Hz | | 0 | 100 Hz | 300 Hz | 200 Hz | 300 Hz | 100 Hz | |
| FREQUENCES ISSUES DU MODULATEUR Hz | 950 Hz | 950 Hz | 1050 Hz | 750 Hz | 950 Hz | 1250 Hz | 1150 Hz | |

# FIG_2

SEQUENCE D'INFORMATION → **CODEUR DE MODULATION** (10) → DF → **SYNTHETISEUR DE FREQUENCE** (20) → SIGNAL DE MODULATION

# FIG_3

SIGNAL MODULE REÇU → **CIRCUIT D'ECHANTILLONNAGE** (100) → **CIRCUIT DE TRANSFORMATION DE FOURIER** (110) → **DECODEUR DE MODULATION** (120) → SEQUENCE DEMODULEE

$H_E$

SS1 → **BASE DE TEMPS** (140)

SS2

**CIRCUIT DE TRANSFORMATION DE FOURIER** (130) → **CIRCUIT DE CALCUL DE SYNCHRONISATION** (150)

# FIG_4

SIGNAL
MODULE
REÇU

$F'_i$   $F'_{i+1}$   $F'_{i+2}$   $F'_{i+3}$

$t$

SS1   Ts   $t$

SS2   Ts   $t$